# EUROPÄISCHE PATENTSCHRIFT

(11) **EP 2 630 015 B1**
(45) Veröffentlichungstag und Bekanntmachung des Hinweises auf die Patenterteilung: **12.10.2016**
(21) Anmeldenummer: 11748655.5
(22) Anmeldetag: 25.08.2011
(51) Int. Cl.: B60T 8/36, B60T 8/44

(54) **VERFAHREN ZUM AUTOMATISCHEN BREMSEN EINES FAHRZEUGS UND STEUERGERÄT WORIN DAS VERFAHREN DURCHGEFÜHRT WIRD**
METHOD FOR AUTOMATICALLY BRAKING A VEHICLE, AND CONTROL UNIT IN WHICH THE METHOD IS CARRIED OUT
PROCÉDÉ DE FREINAGE AUTOMATIQUE D'UN VÉHICULE ET APPAREIL DE COMMANDE PERMETTANT DE METTRE EN OEUVRE LEDIT PROCÉDÉ

(30) Priorität: 18.10.2010 DE 102010042589
(43) Veröffentlichungstag der Anmeldung: 28.08.2013
(73) Patentinhaber: Robert Bosch GmbH, 70442 Stuttgart (DE)
(72) Erfinder: GONZALEZ ROMERO, Rafael, 74360 Ilsfeld-Auenstein (DE); DITTRICH, Sabrina, 71711 Murr (DE); BUSSMANN, Otmar, 74232 Abstatt (DE); SCHAETZLE, Jens, 74199 Untergruppenbach (DE); RODELGO LUCAS, Jose-Maria, 70176 Stuttgart (DE)
(86) Internationale Anmeldenummer: PCT/EP2011/064608
(87) Internationale Veröffentlichungsnummer: WO 2012/052206

(56) Entgegenhaltungen:
- EP-A2- 1 014 395
- WO-A1-97/06040
- WO-A1-2005/051740
- DE-A1- 10 104 497
- DE-A1- 10 347 789
- DE-A1- 19 501 760
- DE-A1- 19 518 267
- DE-A1-102004 029 838
- US-A- 5 876 102

## Beschreibung

### Stand der Technik

Die Erfindung betrifft ein Verfahren zum automatischen Bremsen eines Fahrzeugs mittels einer Bremsfunktion gemäß dem Oberbegriff des Patentanspruchs 1 sowie ein Steuergerät gemäß Anspruch 8.

Moderne Fahrzeuge sind üblicherweise mit einem Fahrdynamikregler, wie z.B. ESP (Elektronisches Stabilitätsprogramm), ausgestattet, der in kritischen Fahrsituationen, wenn das Fahrzeug über- oder untersteuert, radindividuelle Bremseingriffe durchführt.

Darüber hinaus sind so genannte Komfort- oder Mehrwertfunktionen bekannt, die den Fahrer bei einem Bremsvorgang unterstützen. Bekannte Mehrwertfunktionen sind z. B. ein hydraulischer Bremsassistent (HBA), der in kollisionskritischen Fahrsituationen automatisch Bremsdruck aufbaut, ein Assistent bei Fading-Situationen (HFC), der den Fahrer bei Auftreten von Fading unterstützt, oder einen Assistent zur Unterstützung des Bremskraftverstärkers (HBB), der zusätzlich Bremsdruck aufbaut, wenn die Verstärkung des Bremskraftverstärkers nicht ausreichend groß ist.

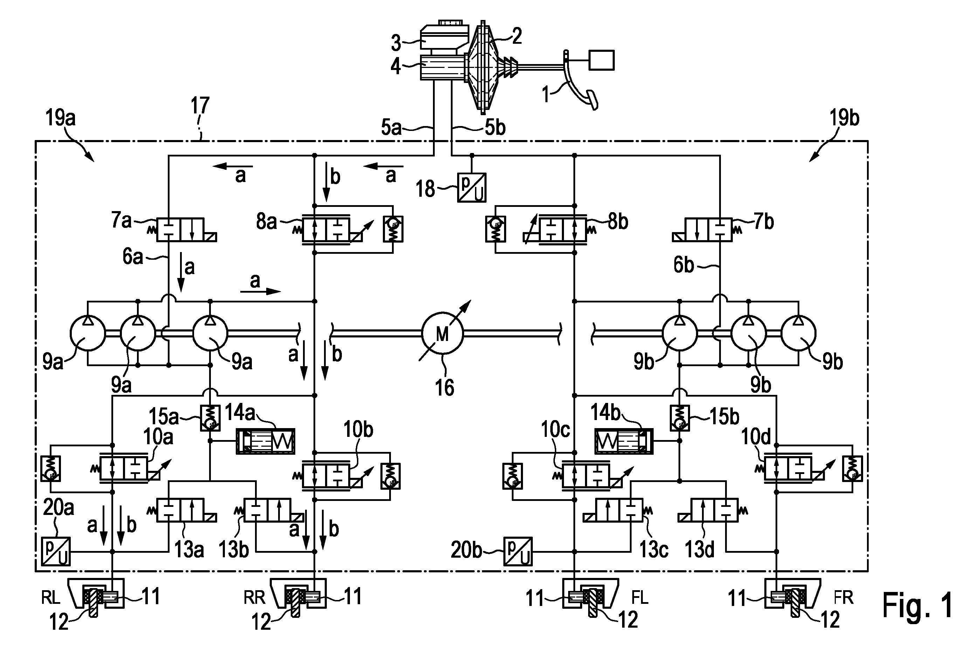

Um diese Bremsfunktionen ausführen zu können, umfassen die Fahrzeuge, wie in der DE 195 01 760 A1 gezeigt, eine speziell angepasste Bremsanlage, wie sie beispielhaft in Figur 1 gezeigt ist. Figur 1 zeigt ein aus dem Stand der Technik bekanntes hydraulisches Bremssystem 17 mit zwei Bremskreisen 19a, 19b in X- oder II-Aufteilung, die symmetrisch ausgebildet sind. Im Folgenden wird daher nur auf den in der Figur links dargestellten Teil 19a Bezug genommen.

Das Bremssystem umfasst ein Fuß-Bremspedal 1, einen Bremskraftverstärker 2 mit einem daran angeschlossenen Hauptbremszylinder 4, auf dem ein Bremsflüssigkeitsbehälter 3 angeordnet ist. Bei einer Betätigung des Fuß-Bremspedals 1 wird in den Hauptbremsleitungen 5a, 5b ein entsprechender Druck erzeugt, der über ein Umschaltventil 8a und die beiden Einlassventile 10a, 10b auf die Bremsen 11 der Räder wirkt. Der Pfad, in dem sich bei Betätigung des Fuß-Bremspedals 1 Druck aufbaut, ist durch Pfeile b gekennzeichnet. Ein Hochdruck-Schaltventil 7a ist in diesem Zustand geschlossen (wie dargestellt).

Bei einem Eingriff einer automatischen Bremsfunktion wird der Bremsdruck mit Hilfe einer Hydraulikpumpe 9a, 9b, die von einem Steuergerät (nicht gezeigt) angesteuert wird, automatisch aufgebaut. Im dargestellten Bremssystem sind pro Bremskreis jeweils drei Pumpen 9a, 9b parallel geschaltet. Während der Druckregelung ist das Umschaltventil 8a geschlossen und das Hochdruckschaltventil 7a meist geöffnet. Die Hydraulikpumpe 9a fördert das Hydraulikfluid dann entlang der Pfade a zu den Radbremsen 11. Das Hydraulikfluid strömt somit aus dem Bremsflüssigkeitsbehälter 3 durch die Hauptbremsleitung 5a, das Hochdruckschaltventil 7a, eine Ansaugleitung 6a, durch die Hydraulikpumpe 9a und weiter durch die Einlassventile 10a, 10b zu den Radbremsen 11. Kurzzeitige Volumenstromspitzen können in einem Ausgleichsbehälter 14a, 14b gepuffert werden.

Die bekannten Bremsfunktionen erreichen zwar eine deutliche Verbesserung der Fahrsicherheit, bringen aber auch einige Nachteile in Bezug auf den Bremskomfort mit sich. Sobald eine automatische Bremsfunktion, wie z.B. HFC oder HBB auslöst, schaltet das Hochdruck-Schaltventil 7a vom geschlossenen in den geöffneten Zustand. In dieser Situation hat jedoch der Fahrer am Bremspedal 1 bereits einen relativ hohen Bremsdruck in den Hauptbremsleitungen 5a, 5b aufgebaut, während auf der anderen Seite des Hochdruck-Schaltventils 7a, in der Ansaugleitung 6a, ein sehr niedriger Druck herrscht. Schaltet nun das Hochdruck-Schaltventil 7a in den geöffneten Zustand, findet ein so genannter Druckausgleichschlag statt, der sich für den Fahrer als ein knallendes Geräusch bemerkbar macht. Außerdem fällt das Bremspedal 1 um einige Zentimeter durch, was ebenfalls für den Fahrer ungewohnt ist.

Die WO 2005/051740 A1 zeigt als nächstliegender Stand der Technik ein automatisches Bremsen eines Kraftfahrzeugs mittels einer hydraulischen Bremsanlage, die ein zwischen einem Hauptbremszylinder und einer Hydraulikpumpe angeordnetes, mehrstufiges Ventil umfasst. Dabei wird der Steuerstrom für das Ventil rampenförmig erhöht, um zunächst eine Vorstufe und danach eine Hauptstufe des Ventils zu öffnen.

Sowohl die DE 10104497 A1 als auch die EP 1014395 A2 als auch die US 5,876,102 A zeigen eine Steuerung des Bremsdrucks in den Radbremsen eines elektronisch geregelten Bremssystems durch Ventile. Dabei beginnt die Ansteuerung der den Bremsdruck steuernden Ventile zunächst durch eine möglichst sprungförmige Annäherung des Ventilstroms bis nahe an den Wert, bei dem die Ventile öffnen bzw. schließen. An diesem Wert kann dann eine rampenförmige Änderung angeschlossen werden.

Die WO 97/06040 A1 offenbart ein elektromagnetisch betätigtes, steuerbares Ventil mit zwei Ventilstufen, von denen die erste betätigt wird und die zweite selbsttätig arbeitet.

### Offenbarung der Erfindung

Es ist daher Aufgabe der vorliegenden Erfindung, den Druckausgleichsvorgang, der nach dem Öffnen des Hochdruck-Schaltventils 7a stattfindet, abzuschwächen.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Gemäß der Erfindung wird vorgeschlagen, den Steuerstrom für ein zwischen dem Hauptbremszylinder und einer Hydraulikpumpe angeordnetes mehrstufiges Hochdruck-Schaltventil rampenförmig zu erhöhen, um zunächst eine Vorstufe und erst eine bestimmte Zeit danach eine Hauptstufe des Ventils zu öffnen. Durch das Öffnen der Vorstufe wird die hohe Druckdifferenz am Schaltventil zunächst abgebaut. Wenn anschließend die Hauptstufe des Schaltventils öffnet, ist der Druckausgleichsvorgang stark minimiert. Der Verlauf des Steuerstroms ist vorzugsweise so ausgelegt, dass die Rampe zum Öffnen der Vorstufe eine kurze Zeit von weniger als z. B. 200 ms, vorzugsweise 50 ms bis 100 ms, dauert.

Gemäß einer bevorzugten Ausführungsform der Erfindung wird der Steuerstrom zunächst stufenartig auf einen Startwert gesetzt und dann weiter rampenförmig erhöht, bis ein Endwert erreicht ist.

Der Startwert ist vorzugsweise etwa ein Wert, bei dem die Vorstufe des Ventils öffnet; vorzugsweise ist der Startwert etwas kleiner als der genannte Wert, beispielsweise 0.9 A bei einem Öffnungs-Stromwert von 1 A. Da die Ventile in der Praxis geringe bauliche Toleranzen und somit leicht unterschiedliche Stromwerte für das Öffnen der Vorstufe aufweisen, wird der Startwert vorzugsweise kleiner gewählt als ein minimal zu erwartender Öffnungs-Stromwert. Sobald am Ventil dann ein Kräftegleichgewicht erreicht ist, öffnet die vom hydraulischen Querschnitt größere Hauptstufe, wobei das Öffnen der Hauptstufe hauptsächlich auch vom anliegenden Differenzdruck abhängig ist.

Der Endwert der Stromrampe ist vorzugsweise ein Wert, bei dem die Vorstufe sicher geöffnet ist. Der Endwert ist vorzugsweise etwas größer als ein unter Berücksichtigung der Ventiltoleranzen maximal zu erwartender Öffnungs-Stromwert. Die Hauptstufe soll vorzugsweise erst nach Erreichen des Endwerts aufgehen, wobei der Zeitpunkt des Öffnens vom Differenzdruck abhängig ist.

Die Rampe hat vorzugsweise eine konstante Steigung.

Der Startwert und/oder der Endwert und/oder die Rampensteilheit des Stromanstiegs sind vorzugsweise variabel. Gemäß einer bevorzugten Ausführungsform ist der Wert der genannten Größen abhängig von einem Bremsdruck, insbesondere dem am Hauptbremszylinder wirkenden Fahrer-Vordruck. Der Vordruck hat nämlich eine schließende Wirkung auf das Ventil, wobei prinzipiell gilt, dass je höher der Vordruck ist, desto höher ist auch der Ventilstrom, der zum Öffnen der Vorstufe beziehungsweise Hauptstufe erforderlich ist. Bei einem sehr hohen Vordruck werden daher vorzugsweise der Start- und Endwert des Ventil-Steuerstroms entsprechend angepasst, um die Vorstufe und die Hauptstufe kontrolliert zu öffnen. Der Vordruck wird mittels eines Drucksensors gemessen.

Um sicher zu gehen, dass sich die Hauptstufe nach der Rampenansteuerung öffnet, wird der Steuerstrom vorzugsweise kurzzeitig so erhöht, so dass die Hauptstufe zwangsläufig aufgehen muss. Die kurzzeitige Erhöhung des Steuerstroms kann beispielsweise pulsförmig sein und ggf. wiederholt werden.

Die vorstehend beschriebene rampenförmige Ansteuerung des Ventils wird vorzugsweise nur bei komfortorientierten Bremsungen angewendet, in denen der Fahrer automatisch unterstützt werden soll. In Notsituationen, in denen das Fahrzeug möglichst sofort verzögern soll, wird das Ventil vorzugsweise unmittelbar geöffnet, um einen sofortigen Druckaufbau zu ermöglichen. In diesem Fall wird der Steuerstrom vorzugsweise sprungartig auf einen hohen Wert gesetzt, bei dem das mehrstufige Ventil unmittelbar öffnet, d. h., die Vorstufe und Hauptstufe des Ventils öffnen nahezu gleichzeitig. Notbremssituationen können z.B. aufgrund der Verzögerung des Fahrzeugs oder über den Gradienten des vom Fahrer vorgegebenen Hauptbremszylinderdrucks erkannt werden. Die Gradientenschwelle kann z.B. auf einen Wert zwischen 50 bar/s Und 100 bar/s gesetzt werden. Andere Schwellen für das Erkennen einer Notsituation können grundsätzlich frei definiert werden.

Die Dauer der Stromrampe des Ventilstroms beträgt vorzugsweise etwa zwischen 100 ms und 200 ms. Sie kann je nach Bremssituation aber auch kürzer oder länger sein.

Gemäß einer bevorzugten Ausführungsform der Erfindung wird die Hydraulikpumpe zu einem Zeitpunkt aktiviert, in dem das Hochdruck-Schaltventil bereits vollständig geöffnet hat (nicht vorher). Dieser Zustand tritt ein, wenn der Ventilstrom in etwa den Endwert erreicht hat. Dadurch wird vermieden, dass die Hydraulikpumpe bei noch geschlossenem Hochdruck-Schaltventil die Ansaugleitung evakuiert und somit der Druckausgleichschlag beim Öffnen des Hochdruck-Schaltventils noch verstärkt wird.

Allerdings sollte auch bzgl. des Anlaufzeitpunkts der Hydraulikpumpe zwischen komfortorientierten Bremsungen und Notsituationen unterschieden werden. In Notsituationen ist es entscheidend, dass möglichst schnell Bremsdruck aufgebaut wird. Die Hydraulikpumpe wird daher, sobald eine Notsituation festgestellt wurde, vorzugsweise sofort aktiviert. Bei komfortorientierten Bremsungen wird dagegen vorzugsweise solange gewartet, bis das Ventil vollständig geöffnet hat.

Zur Überprüfung der Funktionsfähigkeit der Hydraulikpumpen werden in regelmäßigen Abständen Funktionstests durchgeführt, bei denen die Hydraulikpumpen bei geschlossenem Hochdruck-Schaltventil betrieben werden. Dadurch werden die Ansaugleitungen der Hydraulikpumpen evakuiert, so dass es bei der nächsten Betriebsbremsung mit automatischer Bremskraftunterstützung zu einem verstärkten Druckausgleichsvorgang kommt. Es wird daher erfindungsgemäß vorgeschlagen, das Ventil bei einer auf den Funktionstest folgenden Betriebsbremsung, bei niedrigem Bremsdruck kurzfristig zu öffnen und wieder zu schließen. Das Ventil wird vorzugsweise wieder geschlossen, sobald der Bremsdruck im Verlauf der Betriebsbremsung so groß geworden ist, dass er einen vorgegebenen Schwellenwert überschreitet. Das kurzfristige Öffnen und Schließen des Ventils hat zur Folge, dass die Ansaugleitung mit einer kleinen Menge Hydraulikfluid befüllt wird und der Druck in der Ansaugleitung entsprechend ansteigt. Bei der nächsten Betriebsbremsung mit automatischer Bremskraftunterstützung ist der Druckausgleichsvorgang dann weniger stark.

Die Druckschwelle, bei der das Hochdruck-Schaltventil wieder geschlossen wird, liegt vorzugsweise bei Werten kleiner als 5 bar, insbesondere kleiner als 2 bar. Eine höhere Schwelle ist in der Regel nicht sinnvoll, da durch die interne Pumpenkonstruktion höhere Drücke nicht gehalten werden können.

Gemäß einer speziellen Ausführungsform der Erfindung wird das Hochdruck-Schaltventil bereits im Leerweg des Bremspedals geöffnet, noch bevor im Bremskreis Druck aufgebaut wird. Sobald der Bremsdruck die vorstehend beschriebene Schwelle überschreitet, wird das Ventil wieder geschlossen.

Die Erfindung wird nachstehend anhand der beigefügten Zeichnungen beispielhaft näher erläutert. Es zeigen:
Fig. 1 ein aus dem Stand der Technik bekanntes hydraulisches Bremssystem, das zur Durchführung einer automatischen Bremsfunktion ausgelegt ist;
Fig. 2 den Stromverlauf des Steuerstroms eines Hochdruck-Schaltventils gemäß einer Ausführungsform der Erfindung;
Fig. 3 ein schematisches Ablaufdiagramm zur Erkennung eines Pumpen-Testlaufs und zur Ansteuerung des Hochdruck-Schaltventils; und

Figur 1 zeigt verschiedene Kenngrößen der Bremsanlage bei einem Bremsvorgang, der auf einen Pumpen-Testlauf folgt.

Bezüglich der Erläuterung von Figur 1 wird auf die Beschreibungseinleitung verwiesen.

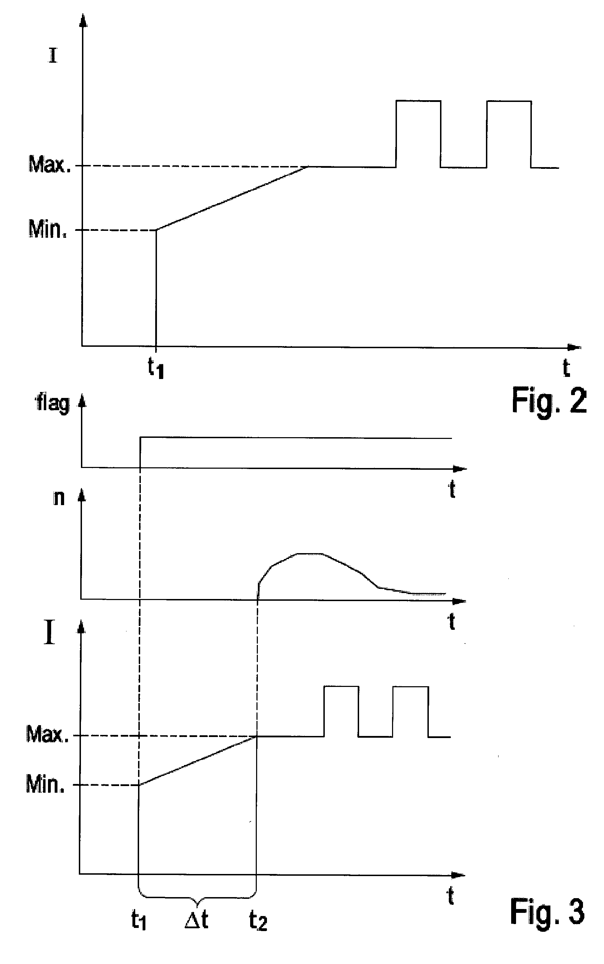

Figur 2 zeigt den zeitlichen Verlauf des Ventilstroms I eines Hochdruck-Schaltventils 7a, 7b bei einer komfortorientierten Bremsung mit automatischer Bremsunterstützung. Der Fahrer betätigt zunächst das Fuß-Bremspedal 1, um an den Radbremsen 11 Bremsdruck aufzubauen. Im Zeitpunkt t₁ schaltet sich ein automatischer Bremsassistent hinzu, da beispielsweise die Verstärkung des Bremskraftverstärkers 2 nicht mehr ausreicht, um das Fahrzeug in der gewünschten Weise zu verzögern (HBB Hydraulic Brake Boost). Um zusätzlich Bremsdruck aufzubauen, wird das Hochdruck-Schaltventil 7a, 7b geöffnet. Hierzu wird der Ventilstrom I zunächst stufenartig auf einen Startwert Min gesetzt, der nahe an demjenigen Wert liegt, an dem die Vorstufe des Ventils 7a bzw. 7b öffnet. Danach wird der Ventilstrom I rampenförmig bis zu einem Endwert Max erhöht. Während des Stromanstiegs öffnet sich die Vorstufe, so dass sich die Vorkammer mit Hydraulikfluid füllt. Erst einige Millisekunden nach Erreichen des Endwerts öffnet auch die Hauptstufe des Ventils 7a, 7b. Der Endwert Max ist so gewählt, dass die Vorstufe des Ventils 7a, 7b in jedem Fall vollständig geöffnet ist. Nach Erreichen des Endwerts Max bleibt der Ventilstrom auf diesem Niveau und wird periodisch pulsförmig erhöht, um sicher zu stellen, dass die Hauptstufe des Ventils 7a, 7b geöffnet bleibt.

Die Dauer der Stromrampe beträgt typischerweise zwischen 100 ms und 200 ms. Je nach Bremssituation kann sie jedoch auch kürzer oder länger sein. Der Wert der Größen "Startwert" (Min), "Endwert" (Max) und die Rampensteilheit ist vorzugsweise abhängig von dem am Hauptbremszylinder 4 herrschenden Fahrer-Vordruck, da letzterer schließend auf das Ventil 7a, 7b wirkt. Der Fahrer-Vordruck wird mittels eines Drucksensors 18 gemessen. Die genannten Größen werden vorzugsweise an den jeweils herrschenden Vordruck angepasst. Dadurch kann das Hochdruck-Schaltventil 7a, 7b in jeder Situation kontrolliert geöffnet werden.

Figur 3 zeigt verschiedene Kenngrößen bei einem Bremsvorgang mit automatischer Bremsunterstützung. Die automatische Bremsunterstützung wird wiederum im Zeitpunkt t₁ aktiv. Dies wird hier durch ein Signal "flag" angezeigt. Der Ventilstrom I wird auf den Wert Min gesetzt und steigt danach wieder rampenförmig an, bis der Endwert Max erreicht ist. Sobald der Endwert Max erreicht ist, wird die Hydraulikpumpe 9a bzw. 9b aktiviert, wie an der Drehzahl-Kennlinie n zu erkennen ist. Die Verzögerung des Einschaltzeitpunkts der Hydraulikpumpe 9a, 9b ist notwendig, da sonst die Ansaugleitung 6a bzw. 6b der Hydraulikpumpe 9a, 9b evakuiert werden würde, solange das Hochdruck-Schaltventil 7a, 7b noch nicht offen ist. Der Startzeitpunkt der Hydraulikpumpe 9a, 9b kann auch geringfügig vor oder nach dem Zeitpunkt t₂ liegen.

Auch an dieser Stelle muss nochmals darauf hingewiesen werden, dass die verzögerte Aktivierung der Hydraulikpumpen 9a, 9b nur für komfortorientierte Bremsungen angewendet werden sollte. Im Falle einer Notsituation sollten die Hydraulikpumpen 9a, 9b unmittelbar nach dem Erkennen der Notsituation eingeschaltet werden, um einen möglichst schnellen Druckaufbau zu ermöglichen.

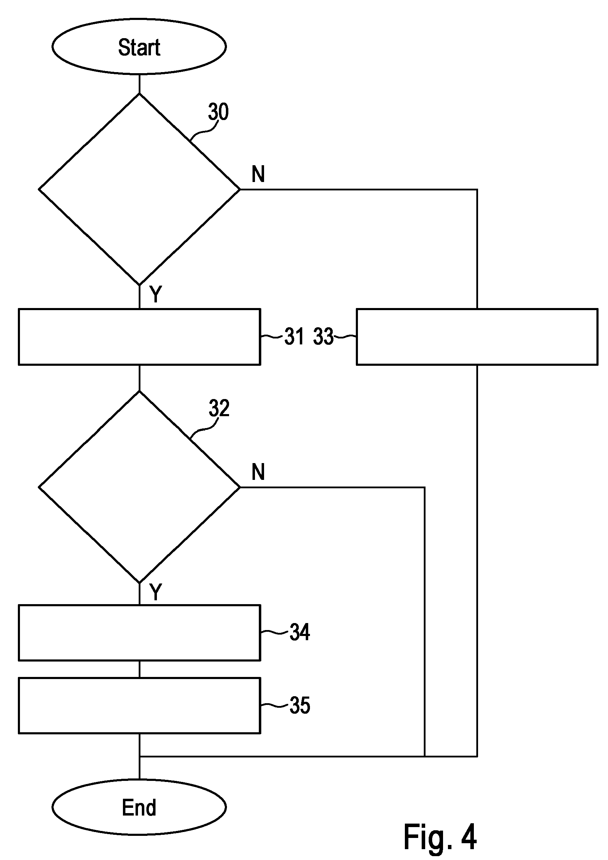

Figur 4 zeigt ein Ablaufdiagramm zur Erkennung eines Pumpen-Testlaufs und zur Ansteuerung des Hochdruck-Schaltventils 7a, 7b nach einem Testlauf. Die Hydraulikpumpen 9a, 9b werden üblicherweise regelmäßig mittels eines Testlaufs auf Funktionsfähigkeit überprüft, wobei sie in Betrieb gesetzt werden, während die Hochdruck-Schaltventile 7a, 7b geschlossen sind. Dadurch werden die Ansaugleitungen 6a, 6b evakuiert, so dass ein nachfolgender Druckausgleichsvorgang wesentlich heftiger ausfällt. Um dies zu vermeiden, wird in Schritt 30 zunächst überprüft, ob ein solcher Pumpentestlauf stattgefunden hat. Falls kein Testlauf stattgefunden hat (Fall N), wird in Schritt 33 ein Flag zurück gesetzt, und das Verfahren endet. Hat dagegen ein Pumpentestlauf stattgefunden (Fall Y), wird in Schritt 31 ein Flag gesetzt. In diesem Fall wird das Hochdruck-Schaltventil 7a, 7b bei einem nachfolgenden Bremsvorgang kurzfristig bei sehr geringen Bremsdruck geöffnet und wieder geschlossen, um die evakuierten Ansaugleitungen 6a, 6b mit Hydraulikfluid zu befüllen und somit den Druckausgleichsvorgang abzuschwächen.

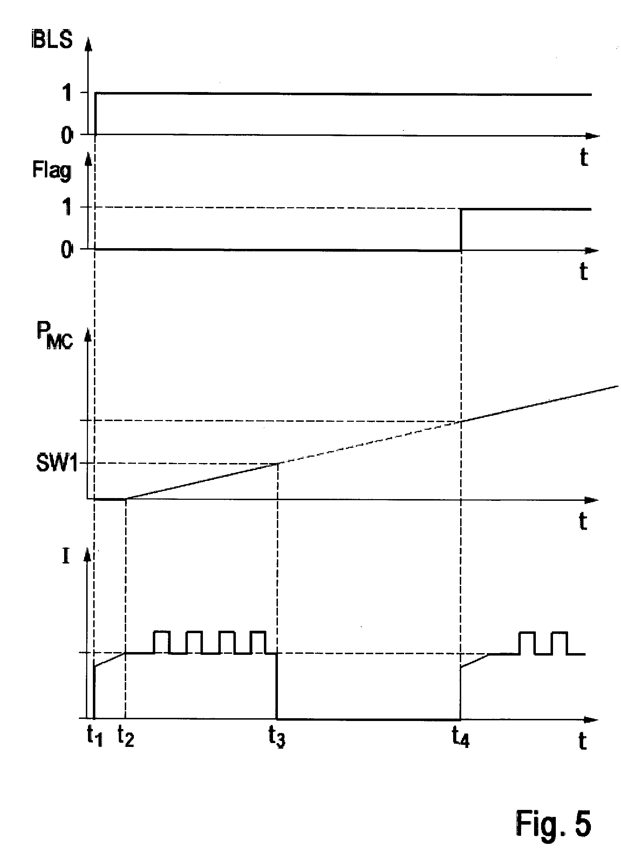

Die nächste Betriebsbremsung kann beispielsweise mittels des Bremslichtschalters erkannt werden. Das Signal des Bremslichtschalters BLS ist in Figur 5 oben dargestellt.

In Schritt 32 wird nun abgefragt, ob das Flag aus Schritt 31 gesetzt ist und das Signal BLS aktiv ist. Wenn beide Bedingungen erfüllt sind und gleichzeitig der Bremsdruck p_{mc} kleiner ist als ein vorgegebener Schwellenwert SW1, z.B. 2 bar, wird das Hochdruck-Schaltventil 7a bzw. 7b in der vorstehend beschriebenen Weise bestromt (Schritt 34), d.h. kurzfristig geöffnet und wieder geschlossen. Der zugehörige Stromverlauf I ist in Figur 5 unten dargestellt. Sobald der am Hauptbremszylinder herrschende Vordruck p_{mc} den Schwellenwert SW1 von z.B. 2 bar überschreitet, wird der Steuerstrom I ausgeschaltet und somit das Ventil 7a, 7b geschlossen. Das Hochdruck-Schaltventil 7a bzw. 7b bleibt danach bis zum Zeitpunkt t₄ geschlossen. In Schritt 35 wird das Flag, das einen Testlauf der Pumpe anzeigt, wieder zurück gesetzt.

Im Zeitpunkt t₄ wird eine automatische Bremsfunktion aktiv, die den Fahrer bei einem Bremsvorgang unterstützt. Das zugehörige Funktions-Flag springt von 0 auf 1, wie in Figur 5 zu sehen ist. Unmittelbar danach wird das Hochdruck-Schaltventil 7a, 7b geöffnet, um den Druckausgleichsvorgang abzuschwächen. Dabei werden die Vorstufe und Hauptstufe des Ventils 7a, 7b sequentiell geöffnet, wie vorstehend beschrieben wurde.

## Patentansprüche

1. Verfahren zum automatischen Bremsen eines Kraftfahrzeugs mittels einer hydraulischen Bremsanlage (17), die ein zwischen einem Hauptbremszylinder (4) und der Ansaugseite einer Hydraulikpumpe (9a, 9b) angeordnetes, mehrstufiges Ventil (7) umfasst, wobei der Steuerstrom (I) für das Ventil (7) rampenförmig erhöht wird, um zunächst eine Vorstufe und danach eine Hauptstufe des Ventils (7) zu öffnen, und wobei ermittelt wird (30), ob die Hydraulikpumpe (9a, 9b) bei gleichzeitig geschlossenem Ventil (7) gelaufen ist, das Ventil (7) geöffnet wird, sobald die Betriebsbremse betätigt wird, und das Ventil (7) wieder geschlossen wird, wenn der Bremsdruck oder eine dazu proportionale Größe im Laufe des Bremsvorgangs einen vorgegebenen Schwellenwert überschreitet.

2. Verfahren nach Anspruch 1, **dadurch gekennzeichnet, dass** der Steuerstrom (I) zunächst stufenartig auf einen Startwert (Min) gesetzt und dann weiter rampenförmig erhöht wird, bis ein Endwert (Max) erreicht wird, an dem zumindest die Vorstufe sicher geöffnet ist.

3. Verfahren nach Anspruch 2, **dadurch gekennzeichnet, dass** ein Bremsdruck gemessen und der Startwert (Min) und/oder der Endwert (Max) und/oder die Rampensteilheit des Steuerstroms (I) abhängig vom gemessenen Bremsdruck eingestellt werden.

4. Verfahren nach einem der vorhergehenden Ansprüche, **dadurch gekennzeichnet, dass** ermittelt wird, ob eine Notbremssituation vorliegt und, wenn keine Notbremssituation vorliegt, der Steuerstrom (I) gemäß einem der vorhergehenden Ansprüche eingestellt wird und, wenn eine Notbremssituation vorliegt, der Steuerstrom (I) sprungartig auf einen Wert gesetzt wird, bei dem das Ventil (7) unmittelbar vollständig öffnet.

5. Verfahren nach Anspruch 2, **dadurch gekennzeichnet, dass** die Hydraulikpumpe (9a, 9b) aktiviert wird, um den an der Radbremse wirkenden Bremsdruck automatisch zu erhöhen, wenn der Ventilstrom (I) den Endwert (Max) in etwa erreicht hat.

6. Verfahren nach Anspruch 2, **dadurch gekennzeichnet, dass** ermittelt wird, ob eine Notbremssituation vorliegt und, wenn keine Notbremssituation vorliegt, die Hydraulikpumpe aktiviert wird, wenn der Ventilstrom (I) den Endwert (Max) in etwa erreicht hat, und, wenn eine Notbremssituation vorliegt, die Hydraulikpumpe (9a, 9b) sofort eingeschaltet wird, noch bevor das Ventil (7) vollständig geöffnet hat.

7. Verfahren nach Anspruch 1, **dadurch gekennzeichnet, dass** das Ventil (7) wieder geschlossen wird, wenn der Bremsdruck oder eine dazu proportionale Größe einen Schwellenwert kleiner als etwa 5 bar, insbesondere 2 bar, überschreitet.

8. Steuergerät, umfassend Mittel, mittels derer eines der vorstehend beanspruchten Verfahren durchgeführt wird.

## Claims

1. Method for automatically braking a motor vehicle by means of a hydraulic brake system (17) which comprises a multi-stage valve (7) which is arranged between a master brake cylinder (4) and the intake side of a hydraulic pump (9a, 9b), wherein the control current (I) for the valve (7) is increased in a ramp shape in order initially to open a preliminary stage and then a main stage of the valve (7), and wherein it is determined (30) whether the hydraulic pump (9a, 9b) has run with the valve (7) closed at the same time, the valve (7) is opened as soon as the service brake is actuated, and the valve (7) is closed again if the brake pressure or a variable proportion thereto exceeds a predefined threshold value in the course of the braking process.

2. Method according to Claim 1, **characterized in that** the control current (I) is firstly set in a stepped fashion to a starting value (Min) and is then increased further in a ramp shape until a final value (Max), at which at least the preliminary stage is reliably opened, is reached.

3. Method according to Claim 2, **characterized in that** a brake pressure is measured and the starting value (Min) and/or the final value (Max) and/or the steepness of the ramp of the control current (I) are set as a function of the measured brake pressure.

4. Method according to one of the preceding claims, **characterized in that** it is determined whether an emergency braking situation is occurring, and if no emergency braking situation is occurring the control current (I) is set in accordance with one of the preceding claims, and if an emergency braking situation is occurring the control current (I) is set abruptly to a value at which the valve (7) immediately opens completely.

5. Method according to Claim 2, **characterized in that** the hydraulic pump (9a, 9b) is actuated in order to increase automatically the brake pressure acting at the wheel brake if the valve current (I) has approximately reached the final value (Max).

6. Method according to Claim 2, **characterized in that** it is determined whether an emergency braking situation is occurring, and if no emergency braking situation is occurring the hydraulic pump is actuated if the valve pump (I) has approximately reached the final value (Max), and if an emergency braking situation is occurring the hydraulic pump (9a, 9b) is switched on immediately, even before the valve (7) has completely opened.

7. Method according to Claim 1, **characterized in that** the valve (7) is closed again if the brake pressure or a variable proportion thereto exceeds a threshold value which is less than approximately 5 bar, in particular 2 bar.

8. Control device, comprising means by means of which one of the methods claimed above is carried out.

## Revendications

1. Procédé de freinage automatique d'un véhicule au moyen d'un système de freinage hydraulique (17) comportant une soupape (7) à étages multiples disposée entre un maître-cylindre de frein (4) et le côté aspiration d'une pompe hydraulique (9a, 9b), dans lequel le courant de commande (I) destiné à la soupape (7) est augmenté en forme de rampe afin d'ouvrir tout d'abord un état préliminaire puis un étage principal de la soupape (7), et dans lequel il est déterminé (30) si la pompe hydraulique (9a, 9b) a été mise en fonctionnement lorsque la soupape (7) est simultanément fermée, si la soupape (7) s'ouvre dès que le frein de service est actionné, et si la soupape (7) est de nouveau fermée lorsque la pression de freinage ou une grandeur proportionnelle à celle-ci dépasse une valeur de seuil prédéterminée au cours du processus de freinage.

2. Procédé selon la revendication 1, **caractérisé en ce que** le courant de commande (I) est tout d'abord réglé pas à pas à une valeur de départ (Min) puis est de nouveau augmenté en forme de rampe jusqu'à ce qu'une valeur finale (Max) soit atteinte, à laquelle au moins l'étage préalable est ouvert de façon sûre.

3. Procédé selon la revendication 2, **caractérisé en ce qu'**une pression de freinage est mesurée et **en ce que** la valeur de départ (Min) et/ou la valeur finale (Max) et/ou la pente de la rampe du courant de commande (I) sont réglés en fonction de la pression de freinage mesurée.

4. Procédé selon l'une quelconque des revendications précédentes, **caractérisé en ce qu'**il est déterminé si une situation de freinage d'urgence est présente et, en l'absence d'une situation de freinage d'urgence, le courant de commande (I) est réglé selon l'une quelconque des revendications précédentes et, en cas de situation de freinage d'urgence, le courant de commande (I) est réglé par saut à une valeur pour laquelle la soupape (7) est immédiatement entièrement ouverte.

5. Procédé selon la revendication 2, **caractérisé en ce que** la pompe hydraulique (9a, 9b) est activée afin d'augmenter automatiquement la pression de freinage agissant sur les freins de roues lorsque le courant de soupape (I) a pratiquement atteint la valeur finale (Max).

6. Procédé selon la revendication 2, **caractérisé en ce qu'**il est déterminé si une situation de freinage d'urgence est présente et, en l'absence d'une situation de freinage d'urgence, la pompe hydraulique est activée lorsque le courant de soupape (I) a pratiquement atteint la valeur finale (Max) et, en cas de situation de freinage d'urgence, la pompe hydraulique (9a, 9b) est immédiatement mise en fonctionnement avant même que la soupape (7) se soit entièrement ouverte.

7. Procédé selon la revendication 1, **caractérisé en ce que** la soupape (7) est de nouveau fermée lorsque la pression de freinage ou une grandeur proportionnelle à celle-ci dépasse une valeur de seuil inférieure à environ 5 bar et plus particulièrement, 2 bar.

8. Appareil de commande comprenant des moyens à l'aide desquels un procédé selon l'une quelconque des revendications précédentes est mis en ouvre.
